# EUROPÄISCHE PATENTSCHRIFT

(11) **EP 1 550 541 B1**
(45) Veröffentlichungstag und Bekanntmachung des Hinweises auf die Patenterteilung: **12.03.2008**
(21) Anmeldenummer: 04028977.9
(22) Anmeldetag: 07.12.2004
(51) Int. Cl.: B29C 47/06

(54) **Verfahren sowie Koextrusionsblaskopf zur Herstellung von Mehrschichtblasfolien**
Method and coextrusion blowing head for manufacturing multilayered blown films
Procédé et filière de coextrusion pour la fabrication de films soufflés multicouche

(30) Priorität: 22.12.2003 DE 10360360
(43) Veröffentlichungstag der Anmeldung: 06.07.2005
(73) Patentinhaber: Kiefel Extrusion GmbH, 67547 Worms (DE)
(72) Erfinder: Hessenbruch, Rolf, 42855 Remscheid (DE)
(74) Vertreter: Castell, Klaus

(56) Entgegenhaltungen:
- EP-A- 0 281 776
- EP-A- 0 692 374
- DE-A1- 19 521 026
- US-A- 4 889 477
- US-A1- 2002 054 929
- US-B1- 6 218 024

## Beschreibung

Die Erfindung betrifft eine Vorrichtung zur Herstellung von neunschichtiger Folie aus verschiedenen Polymerschichten, die nach dem Blasfolienverfahren produziert werden.

Mehrschichtfolien (siehe zum Beispiel US 4 889 477 oder US 2002/0054929 A1) werden aus verschiedenen Polymeren hergestellt, um die unterschiedlichen Eigenschaften der einzelnen Polymere in einer Folie zu vereinigen. Diese Eigenschaften werden für den Einsatz der Folien z.B. bei Lebensmittelverpackungen benötigt. Barriereeigenschaften, Schweißverhalten und mechanische und thermische Eigenschaften können so optimiert werden. Es ist verständlich, dass mit der Anzahl der Schichten auch die Optimierungsmöglichkeiten zunehmen. Außerdem können wirtschaftliche Vorteile durch den Einsatz preiswerter und leicht verarbeitbarer Kunststoffe erzielt werden.

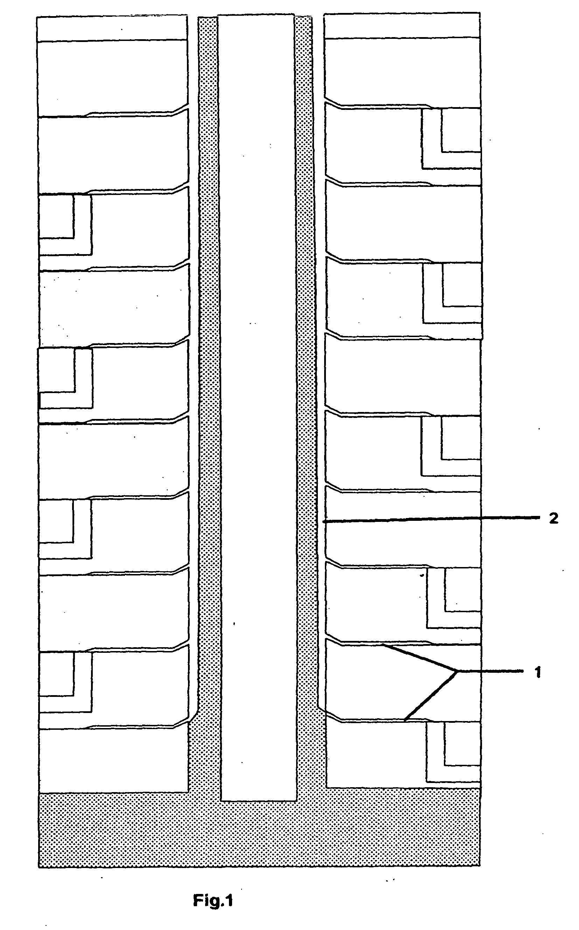

Folien mit mehr als 7 Schichten werden üblicherweise in Blasköpfen erzeugt, bei denen die einzelnen Schichten über waagerechte Schmelzeverteilungen auf den Umfang verteilt werden (sogenanntes Pancake-Design (Figur 1). Die einzelnen Schichten werden höhenversetzt einem zentralen Schmelzekanal zugeführt. Aufgrund der einzelnen übereinander angeordneten Schichtverteilungen baut ein solcher Blaskopf relativ hoch und somit ist auch der zentrale gemeinsame Schmelzekanal sehr lang. Dies wiederum führt zu verfahrenstechnischen Nachteilen hinsichtlich des Einsatzes unterschiedlicher Schmelzeviskositäten und erschwert die Erzielung stark unterschiedlicher Schichtdicken bei guten Schichtdickentoleranzen. Hinzu kommen Nachteile aufgrund der sehr großen Kräfte bei der Verteilung der Schmelzen auf den Umfang.

Zweck der vorliegenden Erfindung ist es, diese Nachteile zu vermeiden und ein Verfahren sowie einen Blaskopf mit konventioneller Schmelzeführung zu entwickeln. Diese Aufgabe wird durch die Merkmale der Ansprüche 1 und 2 gelöst. Weiterbildungen ergeben sich aus dem Anspruch.

Wesentlich dabei ist die getrennte Schmelzeführung und eine Schmelzezusammenführung, die eine hohe Flexibilität hinsichtlich der eingesetzten Kunststoffe und der Schichtdicken erlaubt. Dazu ist es erforderlich, die einzelnen Schmelzeströme so lange wie möglich getrennt zu halten, die Zusammenführung der verschiedenen Schmelzeströme in ihrer Anzahl zu begrenzen und die Zusammenführung so nah wie möglich in den Ausgangsbereich des Blaskopfes zu verlegen. Wichtig ist ferner, dass die Zusammenführung der Schmelzeströme so erfolgt, dass ähnliche Materialien zunächst unter sich gebündelt werden und diese Schmelzebündel mit den anderen, ebenfalls gebündelten Schmelzeströme sinnvoll vereinigt werden.

Die Erfindung wird anhand von in den beigefügten Zeichnungen dargestellten Ausführungsbeispielen näher erläutert. Es zeigen:
- **Figur 1:**: einen Blaskopf mit waagerechter Schmelzevorverteilung (Pancake-Design )
- **Figur 2:**: einen Blaskopf mit 2 Schmelzezusammenführungspunkten
- **Figur 3:**: einen Blaskopf gemäß dieser Erfindung mit 3 Dreifach- und 2 Zweifach- Schmelzezusammenführungen
- **Figur 4:**: einen anderen Blaskopf gemäß dieser Erfindung mit 4 Dreifach-Schmelzezusammenführungspunkten.

Figur 1 zeigt einen Blaskopf mit waagrechter Schmelzeverteilung auf den Umfang 1 und der Zusammenführung der einzelnen Schichten in dem gemeinsamen Kanal 2, wobei die Schmelzeschichten höhenversetzt zusammen geführt werden. Aufgrund der Bauweise ergeben sich sehr lange Kanäle, in denen die einzelnen Schichten zusammengeführt werden. Daraus entstehen Probleme bei der Auswahl der eingesetzten Materialien, da zur Vermeidung von Vermischungen oder Fließstörungen nur ein begrenztes Spektrum an Viskositäten eingesetzt werden kann. Ferner kann es bei dem langen Kanal 2 zu Entmischungen oder Toleranzveränderungen kommen. Außerdem sind die auftretenden Kräfte durch die Schmelzevorverteilung 1 sehr groß und nur mit großem Aufwand zu bewältigen.

Diese Nachteile werden durch Blasköpfe mit konventioneller Schmelzeführung, bei denen die einzelnen Schmelzeströme nicht weit vom Austritt zusammengeführt werden, vermieden. Diese Blasköpfe sind aber nur als Blasköpfe mit maximal 7 Schichten bekannt, da die Anzahl der Schichten und die Zusammenführung der einzelnen Schichten bei mehr als 7 Schichten nicht beherrschbar erschien.

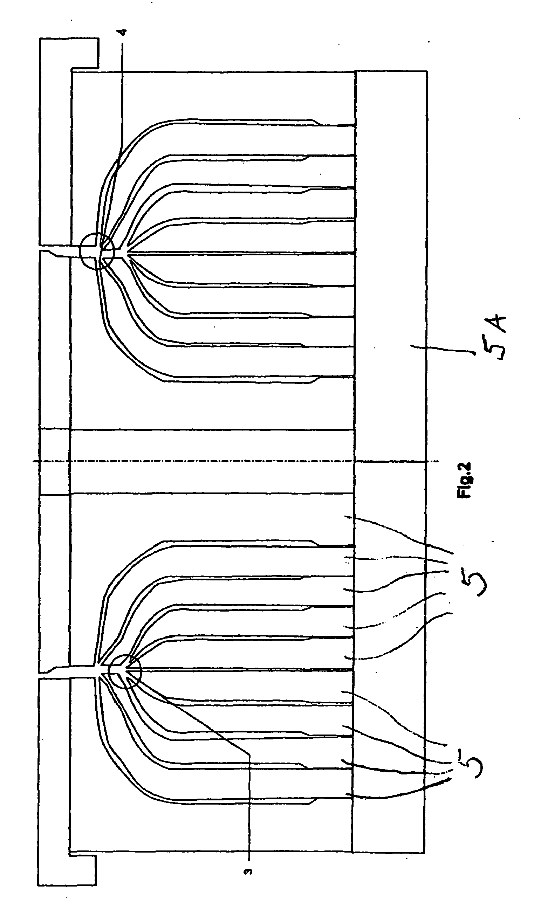

Figur 2 zeigt einen Blaskopf mit 9 Schichten, bei dem versucht wird, möglichst viele Schichten in einem Punkt zusammen zu führen. Im vorliegenden Fall laufen im Punkt 3 fünf Schichten zusammen. Da die Schmelzen aus verschiedenen Rohstoffsorten bestehen, z.B. Haftvermittler und Barrierematerialien, ist diese Lösung nicht ohne Schwierigkeiten einzusetzen, da es im Vereinigungspunkt zu Verwirbelungen kommen kann. Im 2. Vereinigungspunkt 4 werden wieder 5 Schichten zusammen geführt und zwar vier schräg von unten und eine senkrechte von unten, die aus den in Punkt 3 zusammengeführten Schichten besteht, wodurch auch hier die oben erwähnten Probleme auftreten können. Ferner zeigt Figur 2, dass die die Schmelzekanäle bildenden Ringe 5 alle auf der Grundplatte 5A montiert werden und dadurch die Toleranzen der Einzelringe 5 sich addieren und die Einhaltung enger Toleranzen nicht gewährleisten. Zudem ist die Montage und besonders die Demontage sehr zeitaufwendig und kann die Zerlegung in die Einzelteile unmöglich machen, da die Demontage unter Temperaturen zu erfolgen hat, bei der alle Polymere noch im plastischen Zustand sein müssen, die Einzelteile aber aufgrund des hohen Zeitaufwandes auskühlen und die Polymere erstarren und somit die Demontage verhindern.

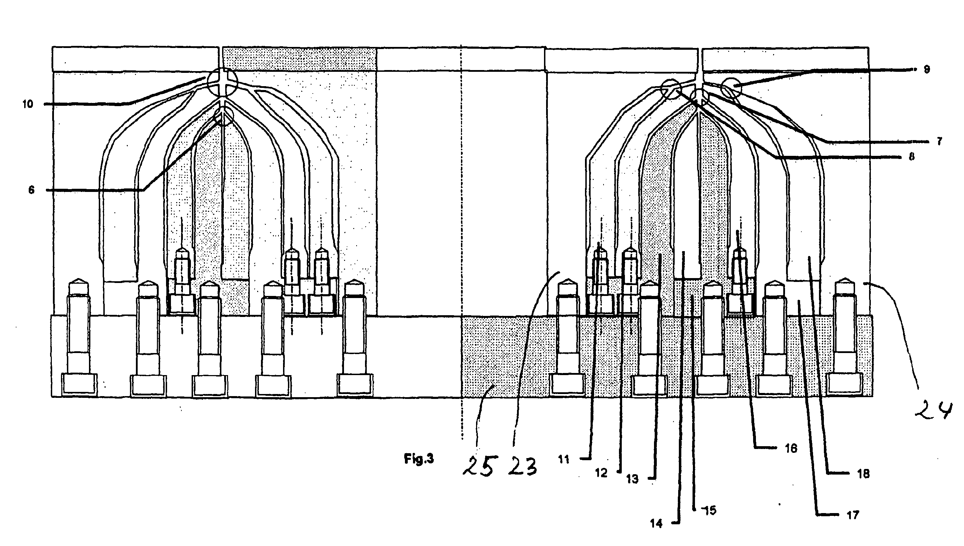

Die vorliegende Erfindung löst diese Probleme. Figur 3 zeigt einen Neun-Schichtblaskopf, bei dem die einzelnen Schichten so zusammengeführt werden, dass nie mehr als 3 Schmelzekanäle vereinigt werden. Im Punkt 6 werden die 3 inneren Schichten zusammengeführt. Da diese Materialien normalerweise aus der gleichen Familie der Barrierematerialien kommen, ist diese Zusammenführung unproblematisch. Dieser Schmelzeverbund vereinigt sich im Punkt 7 mit den nächsten beiden Schichten, normalerweise den Haftvermittlern, d.h. auch hier werden 3 laminar fließende Schmelzeströme vereinigt und zwar zwei von schräg unten und ein Strom senkrecht von unten, der die drei in Punkt 6 zusammengeführten Ströme umfasst. Dieser Schmelzeverbund wiederum trifft ebenfalls als laminare Strömung auf die Schmelzevereinigung 10 aus den beiden inneren und den beiden äußeren Schichten, die sich vorher in den Punkten 8 und 9 vereinigt haben. Die einzelnen Ringe, aus denen sich die Schmelzekanäle bilden, sind bereits vormontiert und ermöglichen so eine einfachere Montage und Demontage. So sind die inneren Ringe 11 und 12 auf dem Tragring 13 montiert, die Ringe 14 und 16 auf dem Tragring 15 und der Ring 18 auf dem Tragring 17. Bei der Montage und Demontage werden die 3 Tragringgruppen 13, 15 und 17 z.B. demontiert und können an getrennten Stellen zeitgleich zerlegt werden, ohne dass die Gefahr des Einfrierens besteht. Bei diesem in Figur 3 dargestellten Blaskopf ist der innere Ring mit 23 und der äußerste Ring mit 24 bezeichnet, während die Grundplatte, auf dem die Tragringe mittels Schrauben befestigt sind, das Bezugszeichen 25 trägt.

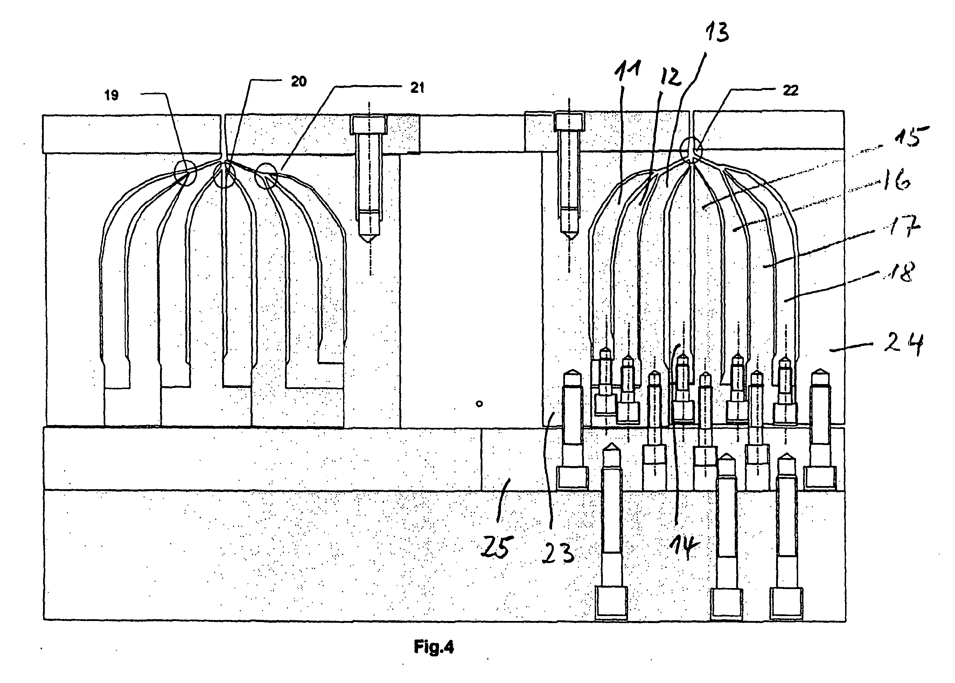

In Figur 4 ist eine andere Lösung eines Neun-Schichtblaskopfes gezeigt, der im wesentlichen die Kriterien des Blaskopfes in Figur 3 erfüllt, aber bei der Zusammenführung der Schmelzen eine noch bessere Lösung darstellt. Bei diesem Blaskopf werden die 9 Schichten sofort so zusammen geführt, dass jeweils 3 Schichten sich in den Punkten 19, 20 und 21 zu einem Schmelzeverbund vereinigen und in einem weiteren Vereinigungspunkt 22 zu dem endgültigen Verbund vereinigen. Besonders vorteilhaft bei dieser Lösung ist, dass die jeweils sich vereinigenden Schmelzen zu ähnlichen Polymersorten gehören. Im Punkt 19 vereinigen sich die drei Außenschichten, die alle aus der Familie der Polyolefine kommen (PE und Haftvermittler). Das gleiche gilt im Vereinigungspunkt 21, bei dem ebenfalls 3 Polyolefinschichten zusammen fließen. Im Vereinigungspunkt 20 schließlich werden 3 Polymere vereinigt, die zur Familie der Barrierematerialien gehören (COPA, PA, EVOH). Diese Schmelzeverbunde treffen als laminare Ströme im Vereinigungspunkt 22 zusammen. Ein weiterer Vorteil dieser Lösung ist, dass alle Schichten relativ lange getrennt fließen und erst kurz vor Austritt aus dem Blaskopf zusammenfließen. Somit werden Vermischungen der einzelnen Schmelzen durch Turbulenzen vermieden, die entstehen können, wenn mehrere Schmelzeströme über längere Kanäle gemeinsam fließen. Bei dieser Lösung können auch Polymere eingesetzt werden, die sehr unterschiedliche Schmelze-Viskositäten aufweisen. Unterschiedliche Schmelzeviskositäten wiederum ermöglichen auch stark unterschiedliche Schichtstärken. Dies trägt zur Steigerung der Wirtschaftlichkeit bei, da die Schichtstärken nicht von der Konstruktion des Blaskopfes bestimmt werden, sondern im wesentlichen von den Erfordernissen der Verpackungsaufgabe. Auch in diesem Fall werden die Ringe, die die Schmelzekanäle bilden, auf Tragringen vormontiert, um die oben erwähnten Vorteile zu nutzen. In Figur 4 sind die gleichen Bezugszahlen verwendet worden, obwohl die einzelnen Ringe hinsichtlich der Bildung der Vereinigungsstellen nicht identisch zu denen nach Figur 3 ausgebildet sind. Es sind hier auch zehn Ringe vorhanden, wobei einige Ringe ebenso wie in Figur 3 als Tragringe ausgebildet sind, um Gruppen von Ringen zu Montageeinheiten zusammenfassen zu können, die dann auf der Grundplatte 25 montiert sind, wodurch die Montage und Demontage erleichtert wird.

## Patentansprüche

1. Verfahren zum Herstellen von neunschichtigen Folien nach dem Blasfolienverfahren, bei welchem jeweils mindestens zwei Schmelzeströme an einer Vereinigungsstelle (19, 20, 21, 22) zusammengeführt werden, ***dadurch gekennzeichnet, dass*** von neun Einzelströmen zunächst jeweils drei benachbarte Schmelzeströme zu drei Drei-Schicht-Schmelzeströmen (19, 20, 21) vereinigt werden und dass dann die drei Drei-Schicht-Schmelzeströme vereinigt werden.

2. Koextrusionsblaskopf zum Herstellen von neunschichtigen Folien nach dem Blasfolienverfahren, mit mehreren konzentrisch zueinander angeordneten Ringen (11 bis 18, 23, 24), welche Kanäle für einzelne Schmelzeströme begrenzen, und mit Vereinigungsstellen (19 bis 22) zur Vereinigung der Schmelzeströme, welche in einem oberen Bereich des Blaskopfes liegen und eine letzte Vereinigungsstelle (22) in unmittelbarer Nähe eines Schmelzeflussaustritts des Blaskopfes aufweisen, ***dadurch gekennzeichnet, dass*** die Kanäle und Vereinigungsstellen so ausgebildet sind, dass die Kanäle von neun Einzelströmen zunächst jeweils drei benachbarte Schmelzeströme zu drei Drei-Schicht-Schmelzeströmen (19, 20, 21) vereinigen und dass sie dann die drei Drei-Schicht-Schmelzeströme an der letzten Vereinigungsstelle (22) vereinigen.

3. Koextrusionsblaskopf nach Anspruch 2, ***dadurch gekennzeichnet, dass*** zehn konzentrische Ringe (11 bis 18, 23, 24) vorgesehen sind, dass hiervon mindestens zwei Ringe als Tragringe (13, 15, 17) mit flanschartigen Ansätzen zur Aufnahme jeweils mindestens eines Ringes (11, 12, 14, 18) ausgestaltet sind und dass die mindestens einen weiteren Ring tragenden Tragringe (13, 15, 17) auf einer Grundplatte (25) angeordnet sind.

## Claims

1. A method for manufacturing nine-layered films by the blown film method, in which respectively at least two melt flows are brought together at a combining point (19, 20, 21, 22), **characterised in that** of the nine individual flows, initially respectively three adjacent melt flows are combined to form three three-layer melt flows (19, 20, 21) and that the three three-layer melt flows are then combined.

2. A coextrusion blowing head for manufacturing nine-layer films by the blown film method, comprising a plurality of rings (11 to 18, 23, 24) arranged concentrically with respect to one another, which channels delimit individual melt flows and comprising combining points (19 to 22) for combining melt flows, which lie in an upper region of the blowing head and comprise a last combining point (22) in the immediate proximity of a melt flow outlet of the blowing head, **characterised in that** the channels and combining points are configured in such a manner that the channels of nine individual flows initially combine respectively three adjacent melt flows to form three-layer melt flows (19, 20, 21) and that they then combine the three-layer melt flows at the last combining point (22).

3. The coextrusion blowing head according to claim 2, **characterised in that** ten concentric rings (11 to 18, 23, 24) are provided, that of these at least two rings (13, 15, 17) are formed as supporting rings (13, 15, 17) with flange-like projections for receiving respectively at least one ring (11, 12, 14, 18) and that the supporting rings (13, 15, 17) carrying at least one further ring are arranged on a base plate (25).

## Revendications

1. Procédé de fabrication de films à neuf couches selon le procédé de lamelle de soufflage, dans lequel chaque fois au moins deux flux de masse fondue sont rassemblés sur une zone de confluence (19, 20, 21, 22), ***caractérisé en ce que**,* sur neuf flux individuels, d'abord chaque fois trois flux de masse fondue sont réunis en un flux de masse fondue à trois couches (19, 20, 21) et **en ce que** les trois flux de masse fondue à trois couches sont réunis.

2. Tête de soufflage de coextrusion pour la fabrication de films à neuf couches selon le procédé de lamelle de soufflage, avec plusieurs bagues (11 à 18, 23, 24) disposées de façon concentrique les unes par rapport aux autres, qui délimitent des conduits pour des flux individuels de masse fondue et avec des zones de confluence (19 à 22) pour réunir les flux de masse fondue, qui se situent dans une région supérieure de la tête de soufflage et avec une dernière zone de confluence (22) à proximité directe d'une sortie du flux de masse fondue de la tête de soufflage, ***caractérisée en ce que**,* les conduits et les zones de confluence sont conçus de sorte que les conduits de neuf flux individuels réunissent d'abord trois flux de masse fondue voisins en trois flux de masse fondue à trois couches (19, 20, 21) et réunissent ensuite les trois flux de masse fondue à trois couches sur la dernière zone de confluence (22).

3. Tête de coextrusion selon la revendication 2, ***caractérisée en ce que**,* il est prévu dix bagues concentriques (11 bis 18, 23, 24), **en ce que** parmi ces dernières, au moins trois bagues sont réalisées sous forme de bagues porteuses (13, 15, 17) avec des embouts de type brides pour réceptionner chaque fois au moins une bague (11, 12, 14, 18) et **en ce que** les bagues porteuses (13, 15, 17) portant au moins une bague supplémentaire sont disposées sur une plaque de base (25).
